# EUROPÄISCHE PATENTSCHRIFT

(11) **EP 1 658 456 B1**
(45) Veröffentlichungstag und Bekanntmachung des Hinweises auf die Patenterteilung: **07.05.2008**
(21) Anmeldenummer: 04738040.7
(22) Anmeldetag: 28.06.2004
(51) Int. Cl.: F16K 3/02, F16K 3/314

(54) **SCHIEBER, INSBESONDERE SCHNELLSCHLUSSSCHIEBER FÜR EINE EXPLOSIONSSCHUTZ-ABSPERRVORRICHTUNG**
SLIDING VALVE, IN PARTICULAR, QUICK-ACTING SLIDING VALVE FOR AN EXPLOSION PROTECTION SHUT-OFF DEVICE
COULISSEAU, EN PARTICULIER COULISSEAU A FERMETURE RAPIDE POUR UN DISPOSITIF D'ARRET ET DE PROTECTION CONTRE LES EXPLOSIONS

(30) Priorität: 29.08.2003 CH 147603
(43) Veröffentlichungstag der Anmeldung: 24.05.2006
(73) Patentinhaber: Rico-Sicherheitstechnik AG, 9100 Herisau (CH)
(72) Erfinder: ZELLWEGER, Jürg, CH-9104 Waldstatt (CH)
(74) Vertreter: Wenger, René
(86) Internationale Anmeldenummer: PCT/CH2004/000399
(87) Internationale Veröffentlichungsnummer: WO 2005/022015

(56) Entgegenhaltungen:
- DE-U- 20 209 420
- GB-A- 1 103 272
- US-A- 3 765 647
- US-A- 5 271 426
- US-A- 5 727 775
- US-B1- 6 422 535

## Beschreibung

Die Erfindung betrifft einen Schieber, insbesondere einen Schnellschlussschieber für eine Explosionsschutz-Absperrvorrichtung gemäss dem Oberbegriff von Anspruch 1. Diese sogenannten Scheiben-Abschlussschieber werden vor allem für gasförmige, staubige oder für heikle flüssige oder pastöse Fördermedien eingesetzt, weil der Bereich um die Durchlassöffnung in offener und geschlossener Betriebslage der Schieberplatte abgedichtet bleibt. Dieser Schiebertyp eignet sich daher besonders gut als Schnellschlussschieber für eine Explosionsschutz-Absperrvorrichtung. Dabei soll beim Auftreten einer Explosion in einer Förderleitung (z.B. eine Staub- oder Gasexplosion) die Förderleitung innerhalb kürzester Zeit abgeschlossen werden, um eine Ausbreitung der Druckstoss- und gegebenenfalls Feuerwelle in der Anlage zu verhindern.

Ein Problem bei gattungsmässig vergleichbaren Schiebertypen ist ersichtlicherweise die möglichst wirkungsvolle und verschleissfreie Abdichtung der Schieberplatte. Durch die DE-U 202 09 420 ist ein Trennschieber bekannt geworden, bei dem die Dichtmittel als starre, ringförmige Dichtkolben ausgebildet sind, welche in ringförmigen Fluidzylindern gehalten sind und welche mit einem Druckmittel gegen die Schieberplatte pressbar sind. Dabei sind die dem Schieber zugewandten Kontaktflächen der Dichtkörper und die damit abdichtend zusammenwirkenden Kontaktflächen der Schieberplatte mit einer Hartstoffschicht versehen, die härter ist als das Material der Schieberplatte. Mit dieser Massnahme soll erreicht werden, dass ohne wesentliche Abnutzung der Dichtmittel auch bei schwierigen Fluiden die Dichtigkeit nicht nachlässt.

Eine derartige Konstruktion ist ersichtlicherweise sehr aufwändig und damit mit hohen Kosten verbunden. Ausserdem ist die Konstruktion für einen Schnellschlussschieber insbesondere in einer Explosionsschutz-Absperrvorrichtung äusserst ungeeignet. Schnellschlussschieber stehen nämlich unter normalen Betriebsbedingungen immer in der Offenstellung und werden nur in Notfällen geschlossen. Unter diesen Voraussetzungen ist es aufwändig, permanent einen Druckmittelkolben als Dichtmittel an ein Druckmittelsystem anzuschliessen.

Die US 5,271,426 zeigt einen Absperrschieber aus zwei stirnseitig aneinander befestigten Gehäuseteilen mit nachgiebigen Dichtungsbuchsen, die von beiden Seiten her gegen den Absperrschieber gepresst werden. Jede Dichtungsbuchse weist Kompressionsöffnungen sowie einen aus härterem Material bestehenden Versteifungsring auf. Die Kompressionsöffnungen stellen einen Freiraum für das beim Öffnungs- und Schliessvorgang verdrängte Volumen des Buchsenelastomermaterials zur Verfügung.

Es ist daher eine Aufgabe der Erfindung, einen Schieber der eingangs genannten Art zu schaffen, bei dem mit dem Einsatz konventioneller Dichtmittel das Problem einer übermässigen Abnutzung oder gar Beschädigung der Dichtmittel gelöst wird und der mit der Reinigungsflüssigkeit oder mit Dampf gereinigt werden kann. Diese Aufgabe wird erfindungsgemäss mit einem Schieber gelöst, der die Merkmale im Anspruch 1 aufweist.

Ringförmige Weichdichtungen eignen sich vor allem bei gasförmigen Fördermedien hervorragend für eine Abdichtung der Schieberplatte. Ein Nachteil derartiger Dichtungen besteht jedoch darin, dass sie auf mechanische Einwirkungen empfindlich sind, welche tangential einwirken, wie dies bei einer Bewegung der Schieberplatte der Fall ist. Beim Vorbeigleiten der Schieberöffnung dehnen sich die elastischen Dichtringe aus und es besteht sogar die Gefahr, dass die Dichtringe aus ihrer Lagernut herausgedrückt werden. Der sich gegen das Zentrum verjüngende Innenrand der Schieberöffnung bewirkt auf optimal einfache Weise, dass die Dichtringe in ihren Lagernuten verbleiben und während der Relativbewegung der Schieberplatte nicht beschädigt werden können.

Besonders vorteilhaft ist der Innenrand sich im Querschnitt keilförmig verjüngend ausgebildet, wobei die Keilflächen vor zugsweise einen Winkel von 4° bis 90° einschliessen. Die Keilform ist dabei vorzugsweise symmetrisch zur Mittelebene der Schieberplatte ausgebildet. Auch eine asymmetrische Keilform wäre in bestimmten Fällen allerdings denkbar. Es ist ausserdem zweckmässig, wenn die Keilform im Bereich des kleinsten Innendurchmessers abgestumpft ist. Die Abstumpfung kann dabei gerundet oder gerade verlaufen. In bestimmten Fällen wäre es aber sogar denkbar, dass die Keilform ohne Abstumpfung schneidenartig ausgebildet ist. In einem derartigen Fall würden beim Schliessvorgang Festkörper durchtrennt werden, welche im Bereich der Schieberebene liegen.

Die Dichtwirkung kann verbessert werden, wenn wenigstens auf einer Seite der Schieberplatte zwei Dichtringe konzentrisch zueinander angeordnet sind. Vorzugsweise werden aber auf beiden Seiten der Schieberplatte die gleichen Dichtmittel angeordnet.

Die Durchlassöffnung kann durch koaxiale Rohrstücke, insbesondere Rohranschlussstücke gebildet werden, deren einander zugewandte Stirnseiten die Schieberplatte zwischen sich aufnehmen, wobei die Dichtringe an den Stirnseiten angeordnet sind. Bei diesen Rohrstücken könnte es sich auch unmittelbar um die Endabschnitte der Förderleitungen handeln. Diese Rohrstücke können lösbar am Schiebergehäuse gehalten sein, was den Vorteil hat, dass der Zustand der Dichtungen durch Entfernen der Rohrstücke relativ leicht überprüft werden kann.

Bei einer alternativen Ausgestaltung sind die Rohrstücke bezüglich Ihrer Relativlage zur Schieberplatte verstellbar am Schiebergehäuse gehalten. Damit kann ersichtlicherweise die Zustelltiefe und damit die Anpresskraft der Dichtringe gegen die Schieberplatte exakt eingestellt werden.

Das Schiebergehäuse kann auf jeder Seite der Schieberplatte je einen Flansch mit einem Innengewinde aufweisen, wobei die mit einem Aussengewinde versehenen Rohrstücke in die Flansche eingeschraubt sind. Mit einer derartigen Gewindeverbindung lässt sich die Zustelltiefe besonders gut einstellen. Die Sicherung der gewählten Gewindestellung erfolgt mit konventionellen Sicherungsmitteln. Selbstverständlich wäre es aber generell auch denkbar, die umlaufenden Dichtringe an einer anderen Stelle des Schiebergehäuses zu platzieren, beispielsweise an den Stirnseiten der erwähnten Flansche.

Weitere Einzelmerkmale und Vorteile der Erfindung ergeben sich aus den Zeichnungen und aus dem nachstehend beschriebenen Ausführungsbeispiel. Es zeigen:
- Figur 1:: Eine perspektivische Aussenansicht eines Schiebers,
- Figur 2:: ein Teilquerschnitt durch das Schiebergehäuse beim Schieber in der Offenstellung,
- Figur 3:: das Detail X gemäss Figur 2,
- Figur 4:: ein Teilquerschnitt durch das Schiebergehäuse beim Schieber in der Schliessstellung, und
- Figur 5:: das Detail Y gemäss Figur 4.

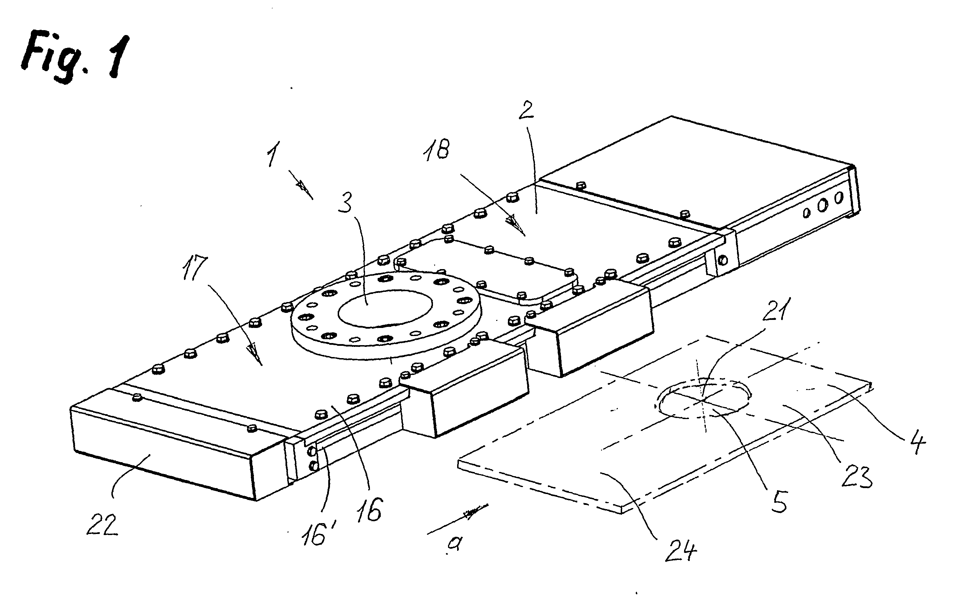

Gemäss Figur 1 besteht der generell mit 1 bezeichnete Schieber aus einem Schiebergehäuse 2, das eine Durchlassöffnung 3 bildet. Das Schiebergehäuse ist rechteckig ausgebildet und besteht im Wesentlichen aus den beiden im Abstand zueinander gehaltenen Gehäuseplatten 16 und 16'. Zwischen diesen beiden Platten ist die von Aussen nicht sichtbare Schieberplatte 4 linear verschiebbar gelagert. Die Schieberplatte ist zum besseren Verständnis mit strichpunktierten Linien als seitliche Projektion dargestellt.

Die Schieberplatte 4 verfügt über eine Schieberöffnung 5 mit einem Zentrum 21, welche in der Offenstellung mit der Durchlassöffnung 3 am Schiebergehäuse korrespondiert. Beim Ausführungsbeispiel ist 22 die Antriebsseite mit einem nicht näher dargestellten Schieberantrieb. Der Antrieb könnte aber auch am entgegengesetzten Ende des Schiebergehäuses 2 oder beidseitig angeordnet sein.

Wird die Schieberplatte in Schliessrichtung a verschoben, bewegt sich derjenige Abschnitt 23 der Schieberplatte mit der Schieberöffnung 5 in einen Aufnahmeraum 18 zwischen den beiden Gehäuseplatten 16 und 16'. Die Durchlassöffnung 3 wird dann vom restlichen Abschnitt 24 der Schieberplatte 4 verschlossen. In der dargestellten Offenstellung befindet sich dieser restliche Abschnitt 24 in einem gegenüberliegenden Aufnahmeraum 17. Die Verschiebung der Schieberplatte 4 erfolgt mit hier nicht näher dargestellten Antriebsmitteln, beispielsweise über einen Pneumatikantrieb. Bei Explosionsschutz-Absperrvorrichtungen werden zum Schliessen des Schiebers auch Treibladungen eingesetzt, die im Auslösefall gezündet werden. Zu diesem Zweck sind stromaufwärts Drucksensoren angeordnet, welche im Falle einer Explosion den Schnellschlussschieber innerhalb von Millisekunden und in jedem Fall vor Eintreffen der Stosswelle schliessen. Diese Antriebsmechanismen sind dem Fachmann jedoch bekannt.

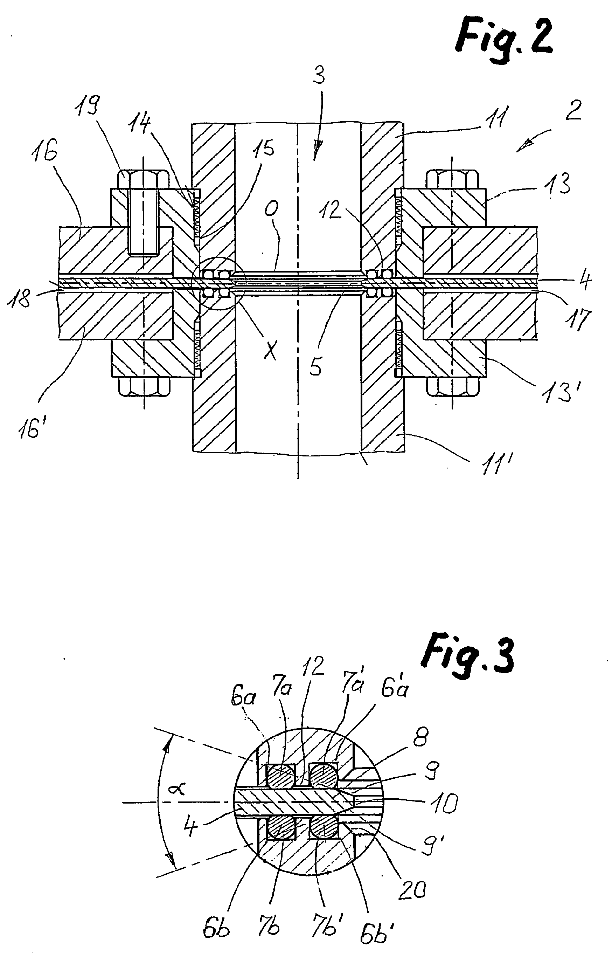

Die Figuren 2 und 3 zeigen einen Teilquerschnitt des Schiebers gemäss Figur 1 im Bereich der Schieberplatte in der Offenstellung O. Die Durchlassöffnung 3 wird durch die Rohrstücke 11, 11' gebildet, deren Stirnseiten 12 einander zugewandt sind und ausserdem umlaufende Nuten 6, 6a' und 6b, 6b' aufweisen. In diesen Nuten sind O-Ringe 7a, 7a' und 7b, 7b' aus elastischem Material gehalten. Die Rohrstücke 11, 11' sind im Endabschnitt mit einem Aussengewinde 15 versehen. An diesen Aussengewinden können die Rohrstücke in das Innengewinde 14 der Flansche 13, 13' eingeschraubt werden, welche mittels Befestigungsschrauben 19 an den beiden Gehäuseplatten 16, 16' befestigt sind. Die Einschraubtiefe der Rohrstücke 11, 11' wird so gewählt, dass die O-Ringe 7a, 7a' und 7b, 7b' mit der gewünschten Anpresskraft gegen die Schieberplatte 4 gepresst werden.

Wie insbesondere aus Figur 3 ersichtlich ist, hat der Innenrand 8 der Schieberöffnung 5 eine keilförmige Anschrägung mit den Keilflächen 9, 9'. Diese schliessen zwischen sich einen Winkel α von ca. 40° ein. Im Bereich des kleinsten Innendurchmessers der Schieberöffnung ist eine hohlzylindrische Abstumpfung 10 angeordnet. Die keilförmige Verjüngung ist ersichtlicherweise derart ausgebildet, dass die inneren Dichtringe 7a', 7b' noch auf der maximalen Wandstärke der Schieberplatte 4 aufliegen. Ausserdem sind die Stirnseiten 12 der Rohrstücke 11, 11' im Bereich der Durchlassöffnung 3 mit einer Anschrägung 20 versehen, damit möglichst keine Toträume entstehen, in denen sich Feststoffe ansammeln könnten. Der geöffnete Schieber kann so jederzeit relativ leicht mit einer Reinigungsflüssigkeit oder mit Dampf gereinigt werden.

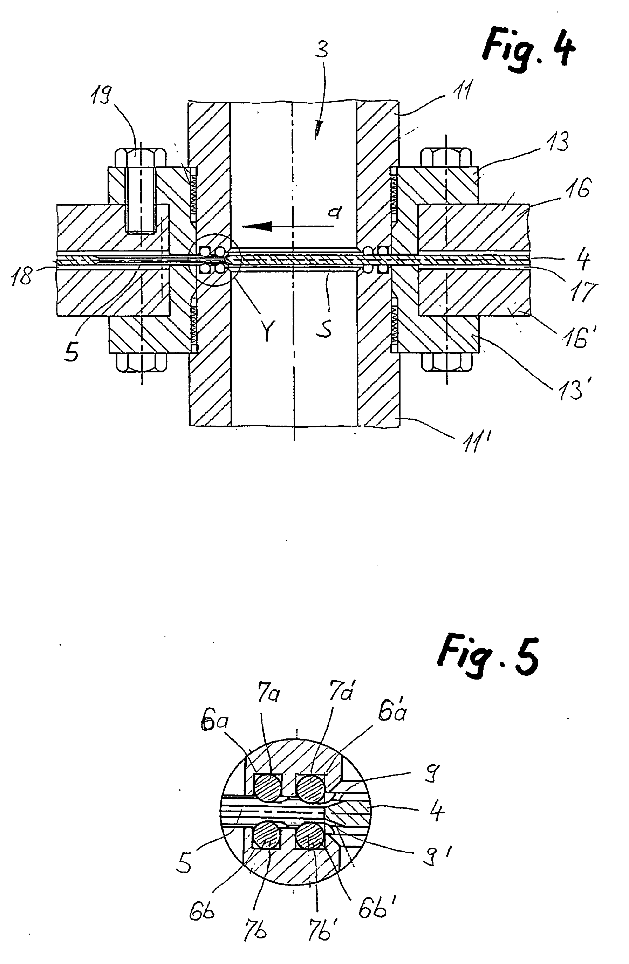

Die Auslösung des Schiebers in die Schliessstellung S ist in den Figuren 4 und 5 dargestellt. Die Schieberplatte 4 bewegt sich dabei in Pfeilrichtung a gegen den Aufnahmeraum 18. Figur 5 zeigt die Lage der Schieberplatte 4 kurz vor dem Erreichen der Endstellung. Die Dichtringe 7a, 7a' und 7b, 7b' können sich zwar beim Überfahren der Schieberöffnung 5 etwas ausdehnen, sie werden jedoch durch die Keilflächen 9, 9' schonend wieder in die Nuten 6a, 6a', 6b, 6b' zurückgedrückt, so dass eine Beschädigung oder gar ein Herausdrücken verhindert wird. Beim vollständigen Erreichen der Schliessstellung liegen die Dichtringe 7a, 7a', 7b, 7b' wiederum ausschliesslich auf der maximalen Wandstärke der Schieberplatte 4 auf. Damit ist gewährleistet, dass im Auslösefall des Schnellschlussschiebers kein Medium über eine allenfalls beschädigte oder herausgedrückte Dichtung austreten kann.

Nach dem Auslösen des Schnellschlussschiebers können ohnehin alle Bauteile daraufhin überprüft werden, ob sie keinen Schaden genommen haben. Dies wird durch die herausschraubbaren Rohrstücke 11, 11' wesentlich erleichtert. Die Führung der Schieberplatte erfolgt bei der erfindungsgemässen Ausführung ersichtlicherweise zwischen den umlaufenden Dichtungen 7a, 7a', 7b, 7b'. Beim Auftreffen der Stosswelle auf die geschlossene Schieberplatte werden die Dichtringe auf einer Seite der Schieberplatte belastet und auf der anderen Seite entlastet. Bei richtiger Vorspannung der Dichtringe ist jedoch selbst dann eine absolute Dichtigkeit gewährleistet, wenn die Schieberplatte 4 bis gegen die Stirnseite 12 eines Rohrstücks 11 oder 11' gepresst wird.

Besonders vorteilhaft ist das Schiebergehäuse auf der Innenseite und/oder die Schieberplatte wenigstens teilweise mit einer hitzeresistenten, die Oberfläche vorzugsweise versiegelnden Beschichtung versehen. Als Beschichtungsmaterial kommt z.B. ein Polytetrafluorethylen (PTFE) wie z.B. TEFLON® in Frage. Bei Gasgeneratoren als Ventilantrieb hat es sich gezeigt, dass die beim Zünden entstehende Hitzewelle die Oberfläche der Metallteile bis auf 800°C erwärmt. Dabei entsteht zusammen mit Feuchtigkeitsrückständen auf der Metalloberfläche ein klebriger Film, der nur schwer zu entfernen ist. Die hitzeresistente Beschichtung verhindert einerseits das Eindringen von Feuchtigkeit in die Mikrostruktur der Metalloberfläche und wirkt andererseits als Wärmebremse. Die Oberflächen bleiben dabei auch nach mehrmaligem Auslösen des Gasgenerators sauber bzw. Pulverrückstände können sich nicht festsetzen. Diese Beschichtung könnte sehr vorteilhaft auch an anderen Schnellschlussventilen mit Gasgenerator als Antrieb eingesetzt werden.

## Patentansprüche

1. Schieber, insbesondere Schnellschlussschieber (1) für eine Explosionsschutz-Absperrvorrichtung, mit einem Schiebergehäuse (2), das eine Durchlassöffnung (3) enthält sowie mit einer Schieberplatte (4) die eine die Durchlassöffnung (3) freigebende Schieberöffnung (5) aufweist und die im Schiebergehäuse (2) zwischen einer Offenstellung (O) und einer Schliessstellung (S) verschiebbar ist, wobei die Schieberplatte (4) in jeder Betriebsstellung durch ringförmige Dichtmittel abgedichtet ist, welche auf beiden Seiten der Schieberplatte die Durchlassöffnung umgebend die Schieberplatte beaufschlagen, wobei der Innenrand (8) der Schieberöffnung (5) bezogen auf die Wandstärke der Schieberplatte sich gegen das Zentrum verjüngend ausgebildet ist, **dadurch gekennzeichnet, dass** die Dichtmittel in umlaufenden Nuten (6a, 6a', 6b, 6b') angeordnete, elastisch verformbare O-Ringe (7a, 7a', 7b, 7b') sind, wobei sich die O-Ringe (7a, 7a', 7b, 7b') beim Überfahren der Schieberöffnung (5) ausdehnen können und durch den sich verjüngenden Innenrand (8) in die Nuten (6a, 6a', 6b, 6b') zurückgedrückt werden.

2. Schieber nach Anspruch 1, **dadurch gekennzeichnet, dass** die Durchlassöffnung (3) durch koaxiale Rohrstücke (11, 11') gebildet wird, deren einander zugewandten Stirnseiten (12) die Schieberplatte (4) zwischen sich aufnehmen und dass die O-Ringe (7a, 7a', 7b, 7b') an den Stirnseiten angeordnet sind.

3. Schieber nach Anspruch 2, **dadurch gekennzeichnet, dass** die Rohrstücke (11, 11') lösbar am Schiebergehäuse (2) gehalten sind.

4. Schieber nach Anspruch 2 oder 3, **dadurch gekennzeichnet, dass** die Rohrstücke (11, 11') bezüglich ihrer Relativlage zur Schieberplatte (4) verstellbar am Schiebergehäuse gehalten sind.

5. Schieber nach Anspruch 4, **dadurch gekennzeichnet, dass** das Schiebergehäuse (2) auf jeder Seite der Schieberplatte (4) je einen Flansch (13, 13') mit einem Innengewinde (14) aufweist, und dass die mit einem Aussengewinde (15) versehenen Rohrstücke in die Flansche eingeschraubt sind.

6. Schieber nach einem der Ansprüche 1 bis 5, **dadurch gekennzeichnet, dass** der Innenrand (8) sich im Querschnitt keilförmig verjüngt, wobei die Keilflächen (9, 9') vorzugsweise einen Winkel (α) von 4° bis 90° einschliessen.

7. Schieber nach Anspruch 6, **dadurch gekennzeichnet, dass** die Keilform im Bereich des kleinsten Innendurchmessers abgestumpft ist.

8. Schieber nach einem der Ansprüche 1 bis 7, **dadurch gekennzeichnet, dass** wenigstens auf einer Seite der Schieberplatte zwei O-Ringe (7a, 7a', 7b, 7b') konzentrisch zueinander angeordnet sind.

9. Schieber nach einem der Ansprüche 1 bis 8, **dadurch gekennzeichnet, dass** das Schiebergehäuse (2) auf der Innenseite und/oder die Schieberplatte (4) wenigstens teilweise mit einer hitzeresistenten Beschichtung versehen sind.

## Claims

1. Slide, in particular a fast closure slide (1) for an explosion protection barrier apparatus, having a slide housing (2) which contains an aperture opening (3), and having a slide plate (4) which has a slide opening (5) which releases the aperture opening (3), and which slide plate (4) can be moved in the slide housing (2) between an open position (O) and a closed position (S), with the slide plate (4) being sealed in each operating position by annular sealing means which, surrounding the aperture opening, act on the slide plate on both faces of the slide plate, the inner edge (8) of the slide opening (5) tapering towards the center with respect to the wall thickness of the slide plate, **characterized in that** the sealing means are elastically deformable O rings (7a, 7a', 7b, 7b') which are arranged in circumferential grooves (6a, 6a', 6b, 6b'), with the O rings (7a, 7a', 7b, 7b'), expanding as they move over the slide opening (5) and being pushed back into the groove (6a, 6a', 6b, 6b'), by the inner edge (8) tapering towards the center.

2. Slide according to Claim 1, **characterized in that** the aperture opening (3) is formed by coaxial tubular pieces (11, 11'), whose mutually facing end faces (12) hold the slide plate (4) between them, and **in that** the O rings (7a, 7a', 7b, 7b') are arranged on the end faces.

3. Slide according to Claim 2, **characterized in that** the tubular pieces (11, 11') are held detachably on the slide housing (2).

4. Slide according to Claim 2 or 3, **characterized in that** the tubular pieces (11, 11') are held on the slide housing such that their relative position with respect to the slide plate (4) can be moved.

5. Slide according to Claim 4, **characterized in that** the slide housing (2) has in each case one flange (13, 13') with an internal thread (14) on each face of the slide plate (4), and **in that** the tubular pieces, which are provided with an external thread (15), are screwed into the flanges.

6. Slide according to one of Claims 1 to 5, **characterized in that** the inner edge (8) tapers with a wedge-shaped cross section, with the wedge surfaces (9, 9') preferably including an angle (α) of 4° to 90°.

7. Slide according to Claim 6, **characterized in that** the wedge shape is truncated in the area of the smallest internal diameter.

8. Slide according to one of Claims 1 to 7, **characterized in that** two O rings (7a, 7a', 7b, 7b') are arranged concentrically with respect to one another on at least one face of the slide plate.

9. Slide according to one of Claims 1 to 8, **characterized in that** the slide housing (2) is provided, with a heat-resistant coating on the inner face, and/or the slide plate (4) is provided with a heat-resistant coating at least in places.

## Revendications

1. Vanne, particulièrement vanne à fermeture rapide (1) pour un dispositif d'arrêt de protection contre les explosions comprenant un boîtier de vanne (2) qui comporte une ouverture de passage (3) ainsi qu'une plaque de vanne (4) qui présente une ouverture de vanne (5) libérant l'ouverture de passage (3) et qui est mobile dans le boîtier de vanne (2) entre une position ouverte (O) et une position fermée (S), la plaque de vanne (4) étant étanchéifiée dans chaque position de fonctionnement par des moyens d'étanchéité annulaires qui entourent l'ouverture de passage et sollicitent la plaque de vanne sur les deux côtés de la plaque de vanne, l'arête intérieure (8) de l'ouverture de la vanne (5) étant rétrécie vers le centre par rapport à l'épaisseur de paroi de la plaque de vanne, **caractérisée en ce que** les moyens d'étanchéité sont des joints toriques (7a, 7a', 7b, 7b') déformables élastiquement disposés dans des rainures périphériques (6a, 6a', 6b, 6b'), les joints toriques (7a, 7a', 7b, 7b') pouvant se dilater lorsqu'ils dépassent l'ouverture de la vanne (5) et être repoussés dans les rainures (6a, 6a', 6b, 6b') par l'arête intérieure (8) qui se rétrécit.

2. Vanne selon la revendication 1, **caractérisée en ce que** l'ouverture de passage (3) est formée par des pièces tubulaires coaxiales (11, 11'), dont les côtés avant (12) tournés l'un contre l'autre reçoivent la plaque de la vanne (4) entre eux et que les joints toriques (7a, 7a', 7b, 7b') sont placés sur les côtés avant.

3. Vanne selon la revendication 2, **caractérisée en ce que** les pièces tubulaires (11, 11') sont maintenues de manière amovible sur le boîtier de la vanne (2).

4. Vanne selon la revendication 2 ou 3, **caractérisée en ce que** les pièces tubulaires (11, 11') sont maintenues de manière mobile sur le boîtier de la vanne par rapport à leur position relative à la plaque de vanne (4).

5. Vanne selon la revendication 4, **caractérisée en ce que** le boîtier de la vanne (2) présente une bride respective (13, 13') avec un filetage intérieur (14) sur chaque côté de la plaque de vanne (4) et que les pièces tubulaires munies d'un filetage extérieur (15) sont vissées dans la bride.

6. Vanne selon l'une des revendications 1 à 5, **caractérisée en ce que** l'arête intérieure (8) est formée de manière rétrécie et en forme de coin en section, les faces de coin (9, 9') incluant de préférence un angle (α) de 4° à 90°.

7. Vanne selon la revendication 6, **caractérisée en ce que** la forme en coin est aplatie au niveau du diamètre intérieur le plus petit.

8. Vanne selon l'une des revendications 1 à 7, **caractérisée en ce que** sur au moins un côté de la plaque de vanne, deux joints toriques (7a, 7a', 7b, 7b') sont placés de manière concentrique entre eux.

9. Vanne selon l'une des revendications 1 à 8, **caractérisée en ce que** le boîtier de vanne (2) est muni sur le côté intérieur et/ou la plaque de vanne (4) est munie au moins partiellement d'un revêtement résistant à la chaleur.
